# EUROPÄISCHE PATENTSCHRIFT

(11) **EP 0 980 824 B1**
(45) Veröffentlichungstag und Bekanntmachung des Hinweises auf die Patenterteilung: **10.01.2007**
(21) Anmeldenummer: 99111384.6
(22) Anmeldetag: 11.06.1999
(51) Int. Cl.: B64C 27/32, B64C 27/33, B64C 27/48

(54) **Rotorblatt für einen lagerlosen Rotor eines Hubschraubers**
Rotorblade for a bearingless helicopter rotor
Pale pour rotor d'hélicoptère du type sans roulements

(30) Priorität: 20.08.1998 DE 19837802
(43) Veröffentlichungstag der Anmeldung: 23.02.2000
(73) Patentinhaber: EUROCOPTER DEUTSCHLAND GmbH, 86609 Donauwörth (DE)
(72) Erfinder: Pfaller, Rupert, 85521 Riemerling (DE); Enenkl, Bernhard, 85461 Bockhorn (DE)
(74) Vertreter: Baum, Wolfgang

(56) Entgegenhaltungen:
- DE-A- 3 510 073
- US-A- 1 682 893

## Beschreibung

### TECHNISCHES GEBIET

Die Erfindung betrifft einen lagerlosen Hubschrauber-Rotor gemäß dem Oberbegriff des Anspruchs 1. Ferner betrifft die Erfindung einen Hubschrauber mit einem solchen Rotor.

### STAND DER TECHNIK

Rotorblätter für Hubschrauber werden überwiegend aus Faserverbund- Werkstoff hergestellt. Die Rotorblätter werden im Betrieb in verschiedenen Richtungen ausgelenkt und dadurch stark belastet. Bei einem lagerlosen Hubschrauber-Rotor besitzt das Rotorblatt am inneren Ende zum Rotorkopf hin ein in Rotorblattlängsrichtung angeordnetes Strukturelement mit einem schlag- und schwenkweichen Bereich sowie mit einem torsionsweichen Bereich, das Bewegungen in Schlag- und Schwenkrichtung sowie eine Winkelauslenkung um die Torsionsachse zulässt. Dieses Strukturelement wird im Fachgebiet auch als Flexbeam bezeichnet. Schlag- und/oder schwenkweicher Bereich des Strukturelements werden zusammenfassend auch als biegeweicher Bereich bezeichnet.

In Richtung Blattlängsachse hat das Strukturelement an seinem Ende zum Rotorkopf hin einen Blattanschluss ausgebildet, der mit dem Rotorkopf verbunden ist. Der Übergang vom Blattanschluss in den biege- bzw. torsionsweichen Bereich des Strukturelements ist zu einem Hals (auch Blatthals genannt) ausgebildet. Das Strukturelement überträgt das Antriebsmoment vom Rotorkopf und überträgt die Fliehkräfte des Blattes auf den Rotorkopf. Damit das Strukturelement separat gefertigt bzw. bei Beschädigung ausgetauscht werden kann, wird oft eine Trennstelle zwischen Strukturelement und dem auftrieberzeugenden Blattbereich eingebaut. Der auftrieberzeugende Blattbereich erstreckt sich von dieser Trennstelle bis zum äußersten Ende des Rotorblattes (Blattspitze genannt).

Der Blatthals des Strukturelements besitzt in der Regel den schlagweichen Bereich, der ein Schlagen des Blattes in vertikaler Richtung ermöglicht. Somit bildet der schlagweiche Bereich eine fiktive, horizontal orientierte Achse (auch Schlaggelenk genannt), um welche das Rotorblatt Schlagbewegungen ausführt. Der Abstand zwischen dieser fiktiven Achse, d. h. dem sogenannten fiktiven Schlaggelenk, bis zur Mittellängsachse des Rotormastes wird als Schlaggelenkabstand bezeichnet. Bei einem lagerlosem Rotor ist dieser Schlaggelenkabstand relativ groß. Der Schlaggelenkabstand beträgt etwa 9% von der von der Mittellängsachse des Rotormastes in radialer Richtung bis zur Blattspitze gemessenen Gesamtlänge. Dieser relativ hohe Schlaggelenkabstand beim lagerlosen Rotor ist verantwortlich für eine relativ hohe Momentübertragung. Der relativ hohe Schlaggelenkabstand ist nachteilig für die Flugeigenschaften des Hubschraubers und führt zu unerwünschten Vibrationen. Blattanschluss und Blatthals müssen entsprechend stark dimensioniert sein, um der damit verbundenen Beanspruchung zu widerstehen. Infolge der hohen Belastungen des Rotorblattes beim lagerlosen Rotor und der damit zu gewährleistenden Festigkeit des Rotorblattes ist es äußerst schwierig, den Schlaggelenkabstand zu reduzieren. Eine solche Materialreduktion am Strukturelement könnte einerseits den Schlaggelenkabstand wesentlich verbessern, andererseits würde sich jedoch die Lebensdauer reduzieren.

Im Stand der Technik ist ein lagerloser Rotor bekannt, bei dem am Rotorkopf eine Rotorkopfplatte befestigt ist. Die Rotorkopfplatte hat entsprechend der Anzahl der Rotorblätter ausgebildete Blattanschlussarme, die jeweils mit einem sogenannten Strukturgrundelement eines Rotorblattes verbunden sind. Das Strukturgrundelement ist ein Teil eines Strukturelements und hat mindestens einen schwenk- und torsionsweichen Bereich. In einem solchen Fall bilden ein Blattanschlussarm der Rotorkopfplatte und ein Strukturgrundelement das bekannte (zusammengesetzte) Strukturelement (Flexbeam). Auch für diesen Fall existieren die bekannten Nachteile. Es ist also unerheblich, ob das Strukturelement einstückig ausgebildet ist oder ob es in Richtung der Blattlängsachse aus mehreren nacheinander angeordneten Teilstücken besteht (zusammengesetztes Strukturelement), die das Strukturelement bilden.

Aus der DE 35 100 73 A1 ist ein Rotor mit gabelförmigen Rotomabenarmen bekannt. Ein jeweiliges Rotorblatt des Rotors ist zwischen einer Gabel eines zugeordneten Rotornabenarms elastisch gelagert. Die Lagerung erfolgt über Axial-Radial-Elastomerlager, die ebenfalls zwischen der Gabel des betreffenden Rotomabenarms angeordnet sind.

US-P-1 682 893 offenbart einen Rotor mit Rotorblättern, die an einem gemeinsamen zentralen Schlaggelenk oder an zwei in unmittelbarer Nähe einer Rotorachse angeordneten Schlaggelenken befestigt sind.

### DARSTELLUNG DER ERFINDUNG

Aufgabe der Erfindung ist es, einen verbesserten lagerlosen Hubschrauber-Rotor zu schaffen, bei dem der Schlaggelenkabstand des Rotorblattes unter vorhandenen Rotorblattbeanspruchungen deutlich verkürzt ist, um die Flugeigenschaften zu verbessern und die Vibrationen zu reduzieren. Gemäß einem weitere Aspekt dieser Aufgabe soll ein Hubschrauber mit einem solchen Rotor bereit gestellt werden.

Diese Aufgabe wird gemäß einem ersten Aspekt gelöst durch einen erfindungsgemäßen lagerlosen Hubschrauber-Rotor mit den Merkmalen des Anspruchs 1.

In Ausgestaltung der Erfindung ist es vorteilhaft, die freitragende Platte im schlagweichen Bereich des Strukturelements vom Rotorblatt zu verbinden. Vorteilhafterweise wird damit die Einstellung eines Neigungswinkels β₀ erreicht. D.h., die Verbindung zwischen der freitragenden Platte und dem Strukturelement kann einen Blattanschlussarm einer Rotorkopfplatte bei einem Stillstand des Rotors in einem Neigungswinkel β₀ gegenüber einer Horizontalen halten. Die Verbindung der freitragenden Platte mit dem Rotorblatt kann auch im torsionsweichen Bereich des Strukturelements realisiert werden.

Die freitragende Platte ist vorteilhafterweise so ausgestaltet, dass sie radial nach außen in Richtung zum Strukturelement erstreckende Blattanschlussarme ausgebildet hat, die eine Verbindung mit dem jeweiligen Strukturelement ermöglichen.

Die freitragende Platte kann in ihrer Biegesteifigkeit variierbar sein. Sie ist damit auf unterschiedliche Flugeigenschaften einstellbar. Vorteilhafterweise ist die freitragende Platte biegeweich.

Gemäß einer weiteren vorteilhaften Ausgestaltungsform besitzt der erfindungsgemäße Rotor ein Strukturelement, welches von seinem Ende am Rotorkopf bis mindestens in den schlagweichen Bereich hinein zumindest zweigeteilt ist. Die durch die Teilung gebildeten Arme oder Armelemente des Strukturelements sind in Richtung der Längsachse des Rotormastes, d. h. in axialer Richtung, gestaffelt. Das Strukturelement ist somit Y-förmig ausgebildet und die zur Rotorachse weisenden Enden der Armelemente sind in Richtung der Rotorachse und damit in Richtung einer Längsachse des Rotormastes voneinander beabstandet.

Entsprechend einer weiteren vorteilhaften Ausgestaltung ist das in axialer Richtung dem Rotorkopf zugewandte Armelement mit dem Rotorkopf verbunden. Das in axialer Richtung dem Rotorkopf abgewandte Armelement ist mit einer Grundplatte verbunden, die in axialer Richtung freitragend oberhalb des Rotorkopfes koaxial positioniert ist.

Die oben genannte Aufgabe wird gemäß einem zweiten Aspekt gelöst durch einen erfindungsgemäßen Hubschrauber mit den Merkmalen des Anspruchs 12.

Mit der erfindungsgemäßen Lösung wird eine Verbesserung der Flugeigenschaften erreicht, und Vibrationen werden deutlich reduziert.

Ausführungsbeispiele zur Erfindung sind in den nachfolgenden Zeichnungen dargestellt und näher beschrieben.

### KURZE BESCHREIBUNG DER ZEICHNUNGEN

Es zeigt:
- Fig. 1: eine schematische Seitenansicht eines erfindungsgemäßen lagerlosen Rotors gemäß einer ersten Ausführungsform mit einer Anordnung einer freitragenden Platte gegenüber dem Rotorkopf und dem Rotorblatt ;
- Fig. 2: eine schematische Draufsicht der Fig. 1;
- Fig. 3: eine schematische Seitenansicht des Rotors von Fig. 1 mit einer biegeweichen freitragenden Platte und bei einer Auslenkung des Rotorblatts ohne Auftrieb;
- Fig. 4: eine schematische Seitenansicht des Rotors von Fig. 1 mit einer biegesteifen freitragende Platte und bei einer Auslenkung des Rotorblatts ohne Auftrieb;
- Fig. 5: eine schematische Seitenansicht eines erfindungsgemäßen lagerlosen Rotors gemäß einer zweiten Ausführungsform, bei dem Blattanschlussarme von Platte und Rotorkopfplatte scherenförmig angeordnet sind;
- Fig. 5a: eine Draufsicht der Fig. 5;
- Fig. 6: eine schematische Seitenansicht eines erfindungsgemäßen lagerlosen Rotors gemäß einer dritten Ausführungsform mit einem axial angeordneten Zwischenstück zwischen freitragender Platte und Rotorkopfplatte;
- Fig. 6a: ein Zwischenstück mit differierenden Durchmessern;
- Fig. 6b: ein Zwischenstück aus Kreuzwicklungen in Faserverbundwerkstoff-Bauweise;
- Fig. 7: eine schematische Seitenansicht eines erfindungsgemäßen lagerlosen Rotors gemäß einer vierten Ausführungsform mit einem Strukturelement mit zwei Armelementen.

### DARSTELLUNG VON BEVORZUGTEN AUSFÜHRUNGSBEISPIELEN

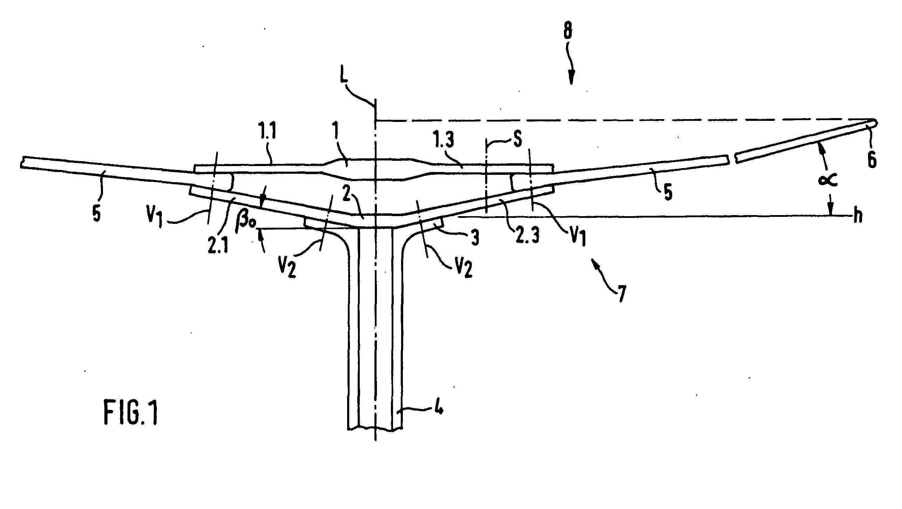

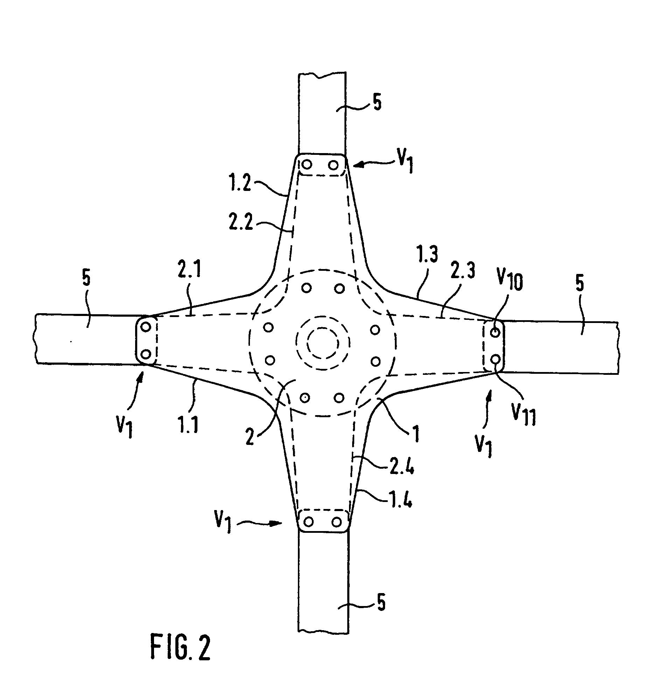

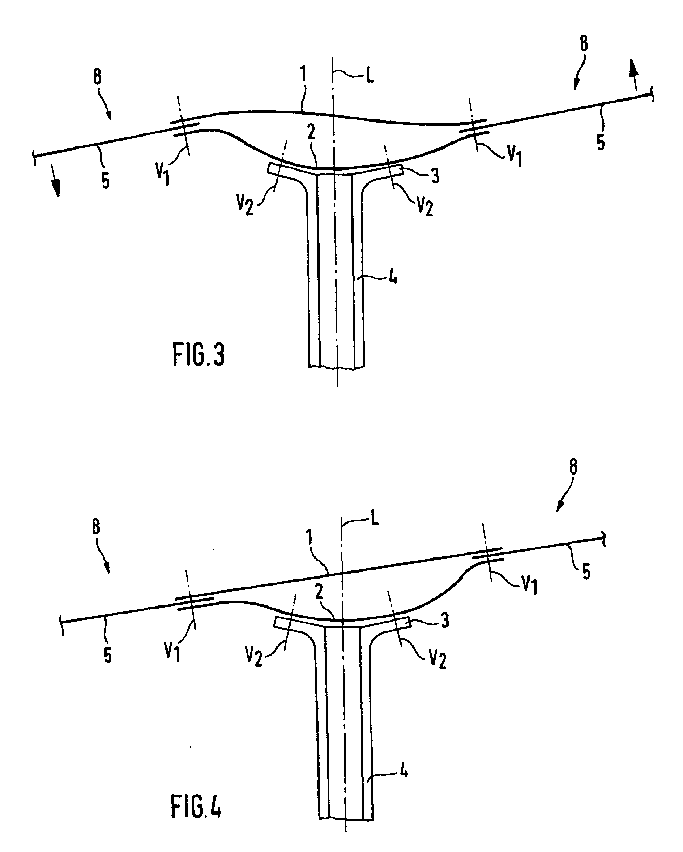

In der Fig. 1 ist in einer schematischen Seitenansicht ein erfindungsgemäßer lagerloser Hubschrauber-Rotor gemäß einer ersten Ausführungsform dargestellt. Dieser Rotor besitzt einen Rotorkopf 3, einen Rotormast 4 sowie in diesem Beispiel vier Rotorblätter 8. Ein einzelnes Rotorblatt 8 besitzt ein Strukturelement 7 und ein auftrieberzeugendes Blatt 6, welches in Längsachse des Strukturelements 7 liegt. An einer lösbaren Trennstelle ist das Strukturelement 7 mit dem auftrieberzeugenden Blatt 6 verbunden. Das entspricht einer grundlegenden Konstruktion eines Rotorblattes. Der Rotormast 4 trägt den Rotorkopf 3. Der Rotormast 4 überträgt ein Antriebsmoment, welches mittels Kraftübertragungsmitteln von einem Antriebsaggregat des Hubschraubers auf den Rotormast 4 übertragen wird und von dort weiter auf die Rotorblätter 8. Die Rotorblätter 8 sind am Rotorkopf 3 befestigt. Fig. 1 zeigt insbesondere ein Strukturelement 7, welches aus zwei Teilstücken zusammengesetzt ist. Das schränkt die Erfindung nicht ein. Ein Strukturelement 7 wird gebildet von einem Blattanschlussarm 2.3 einer Rotorkopfplatte 2 und einem Strukturgrundelement 5. Der Blattanschlussarm 2.3 kann in einem solchen Fall den schlagweichen Bereich und das Strukturgrundelement 5 den schwenk- und torsionsweichen Bereich aufweisen. Der schwenk- und torsionsweiche Bereich kann aber auch bereits im Blattanschlussarm 2.3 enthalten sein. Die Rotorkopfplatte 2 ist mit dem Rotorkopf 3 mittels einer Verbindung V₂ verbunden. Wie Fig. 1 weiterhin zeigt, ist das Rotorblatt 8 mit Strukturelement 7 mittels einer zusätzlichen Platte 1 am Rotorkopf 3 positioniert. Nachfolgend wird dieses Merkmal erläutert.

Mit der Rotation des Rotorblattes 8 entsteht aus Fliehkraft und Auftrieb bekannter Weise eine resultierende Kraft, welche ein bisher nicht im Winkel α fixiertes Rotorblatt 8 um den Winkel α gegenüber der Horizontalen h leicht anhebt. Das Rotorblatt 8 bewegt sich nicht mehr in einer horizontalen Ebene h, sondern folgt bei der Rotation der Kontur eines fiktiven Kegelmantels. Aufbauend auf diesem Sachverhalt ist die Verbindung V₁ zwischen Rotorblatt 8 und der Platte 1 besonders vorteilhaft. Die Verbindung V₁ der Platte 1 mit dem Rotorblatt 8 ermöglicht nämlich bereits im Stillstand des Rotorblattes einen Neigungswinkel β₀ für jeweils einen Blattanschlussarm 2.1, 2.2, 2.3, 2.4 der Rotorkopfplatte 2. Es gilt βo ≥ 0⁰. Da im vorliegenden Fall das Strukturelement 7 aus den beiden Teilstücken Blattanschlussarm 2.3 und Strukturgrundelement 5 besteht, erfolgt die Verbindung V₁ von Blattanschlussarm 1.3 der Platte 1 mit Strukturgrundelement 5 und mit Blattanschlussarm 2.3 der Rotorkopfplatte 2. Mit dieser Maßnahme wird bei Blattrotation die Beanspruchung des fiktiven Schlaggelenks S reduziert. S kennzeichnet den Ort des Gelenks, nicht die Lage. Im vorliegenden Beispiel nach Fig. 1 kann das Schlaggelenk S vorzugsweise im Blattanschlussarm 2.3 der Rotorkopfplatte 2 liegen.

Bemerkenswert bezüglich der Platte 1 ist, dass diese in axialer Richtung freitragend oberhalb des Rotorkopfes 3 koaxial positioniert ist.

Wie im weiteren Fig. 2 erkennen lässt, besitzt die freitragende Platte 1 beispielsweise vier Blattanschlussarme 1.1, 1.2, 1.3 und 1.4. Sie kann als "Sternplatte" ausgebildet sein. Die Anzahl der Blattanschlussarme der Platte 1 richtet sich nach der Anzahl der vorhandenen Rotorblätter 8. Die Verbindung V₁ zwischen einem Blattanschlussarm 1.1, 1.2, 1.3, 1.4 der Platte 1 sowie einem Blattanschlussarm 2.1, 2.2, 2.3, 2.4 der Rotorkopfplatte 2 und dem Strukturgrundelement 5 erfolgt beispielsweise durch die Bolzenverbindung V10 und V11, welche die Verbindung V₁ bilden. Vorteilhafterweise wird das Rotorblatt 8 im schlagweichen Bereich des Strukturelements 7 mit der Platte 1 verbunden. Unter bestimmten, gewünschten konstruktiven Voraussetzungen ist es auch möglich das Rotorblatt bis über den torsionsweichen Bereich des Strukturelements 7 mit der Platte 1 zu verbinden. Die Platte 1 besteht vorzugsweise aus einem Faserverbundwerkstoff mit einstückig angeformten, sich radial nach außen erstreckenden Blattanschlussarmen 1.1, 1.2, 1.3, 1.4.

Mit der Platte 1 und ihrer Anordnung zu den Rotorblättern 8 wird es möglich, das mit dem Rotorkopf 3 zu verbindende Strukturelement 7 in seiner bisher üblichen Materialstärke zu reduzieren, da es andererseits durch die Verbindung mit der Platte 1 zusätzlich gegen mechanische Beanspruchung unterstützt wird. Somit wird es zulässig, beispielsweise den Blatthals des Strukturelements 7 dünner zu gestalten bzw. den Blattanschlussarm 2.1, 2.2, 2.3, 2.4 der Rotorkopfplatte 2 kostengünstiger zu konstruieren. Damit kann der biegeweiche Bereich im Strukturelement 7 näher in Richtung Rotormast 4 geführt werden, so dass sich der Schlaggelenkabstand deutlich verkürzt. Er erreicht den optimal anzustrebenden Wert.

Fig. 3 zeigt eine schematische Seitenansicht des lagerlosen Rotors von Fig. 1 bei einer Auslenkung zweier gegenüberliegender Rotorblätter 8 ohne Auftrieb. Die dabei eingesetzte Platte 1 ist biegeweich. Fig. 3 verdeutlicht hierbei ein Schlagen zweier Rotorblätter 8 in angegebener Pfeilrichtung. Die durch Fliehkraft und Schlagwinkel vorgegebene Winkelstellung der Rotorblätter 8 wird durch Einzelbiegung sowohl von der Platte 1 als auch von der Rotorkopfplatte 2 übertragen. Der Blattanschluss kann somit "weicher" d. h. elastischer gemacht werden. Die im Rotorbetrieb entstehenden Zwangsverformungen erzeugen kleinere Materialspannungen als dies bei bekannten Konstruktionen der Fall ist. Erfindungsgemäß kann folglich das Rotorblatt 8 im Bereich des Strukturelements 7 leichter gebaut werden. Die Platte 1 hat den Vorteil, dass die Fliehkraft eines Rotorblattes 8 teilweise über die Platte 1 aufgefangen und übertragen wird. Die Gesamtheit der an der Platte 1 angreifenden Fliehkräfte, beispielsweise eines vierblättrigen Rotors, brauchen nicht abgesetzt zu werden. Die Querkraft aus Auftrieb kann auch durch einen vorgegebenen, fixierten Neigungswinkel β₀ für das Strukturelement 7 auf Zugkraft umgelenkt werden. Somit kann der Schub aus Querkraft (nachteilig bei Faserverbundwerkstoff) deutlich gemindert werden.

Da die Platte 1 lösbar mit den Rotorblättern 8 verbunden ist, kann sie gegen eine Platte 1 mit veränderter Steifigkeit getauscht werden. Es besteht somit die Möglichkeit, entsprechend den gewünschten Flugeigenschaften eines Hubschraubers, die Platte 1 am Rotor auszutauschen.

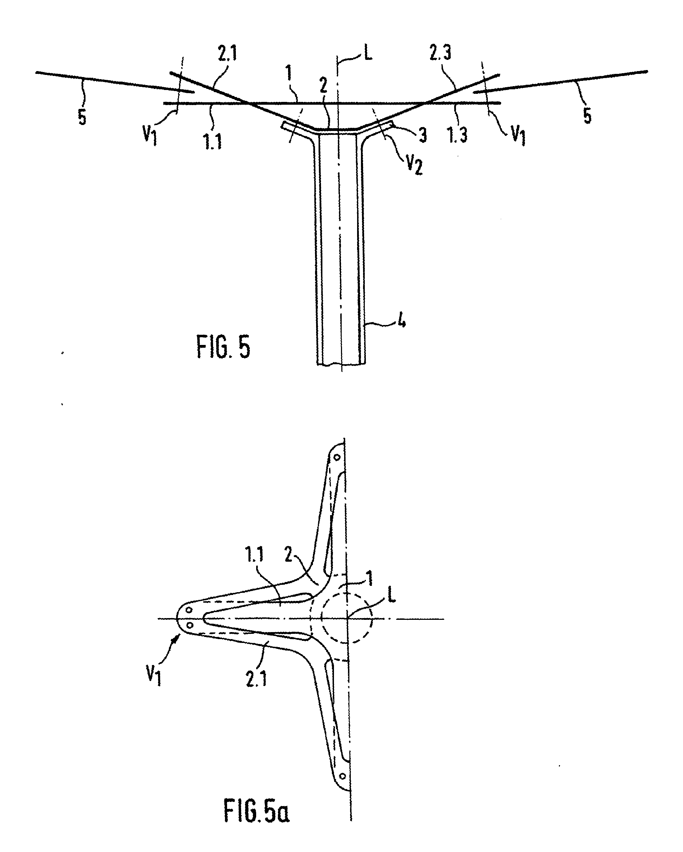

Fig. 4 zeigt gegenüber Fig. 3 die Möglichkeit, durch Wechsel der Materialeigenschaft zwischen der Platte 1 und der Rotorkopfplatte 3 ein Verhalten des Rotors zu erzeugen, welches in dem weiten Bereich zwischen einem lagerlosem Rotor und einem Gimbal-Rotor beliebig variiert werden kann. Diese Möglichkeit ist realisierbar indem beispielsweise die Platte 1 biegesteifer als die Rotorkopfplatte 2 konstruiert wird. Fig. 4 zeigt hierzu eine schematische Seitenansicht einer Rotorblattauslenkung ohne Auftrieb.

Fig. 5 zeigt eine schematische Seitenansicht eines erfindungsgemäßen lagerlosen Rotors gemäß einer zweiten Ausführungsform. Bei dieser weiteren Ausgestaltung sind die Blattanschlussarme 1.1 etc. und 2.1 etc. der Platte 1 und der Rotorkopfplatte 2 zueinander scherenförmig angeordnet, ohne sich zu berühren (Fig. 5a). In einem solchen Fall ist die erzielbare geringere Bauhöhe zwischen Platte 1 und Rotorkopfplatte 2 von Vorteil.

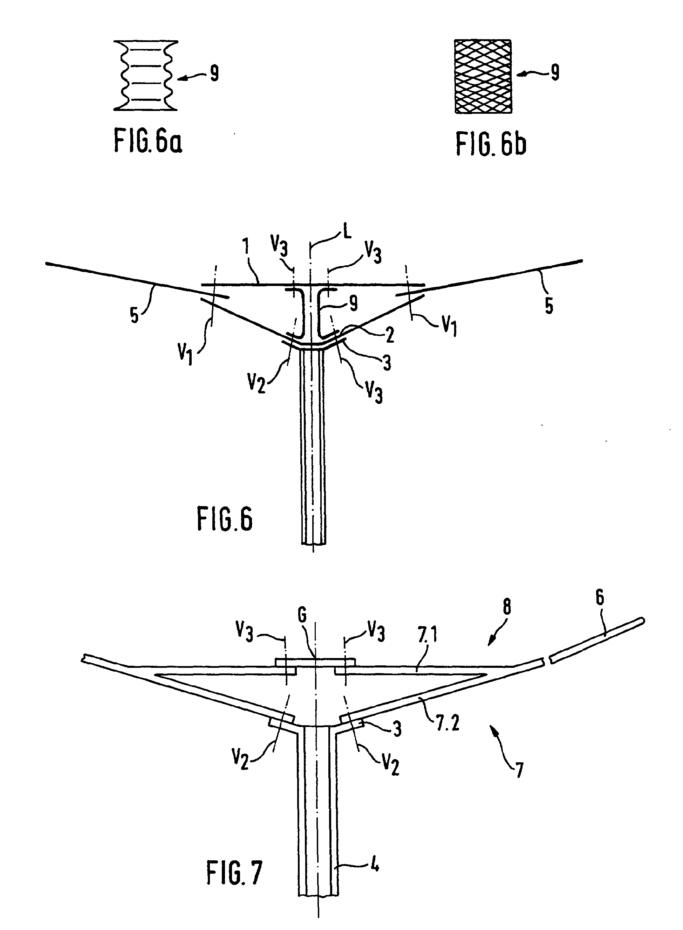

Fig. 6 zeigt eine schematische Seitenansicht eines erfindungsgemäßen lagerlosen Rotors gemäß einer dritten Ausführungsform. Bei dieser Variante ist zwischen Rotorkopfplatte 2 und Platte 1 formschlüssig ein elastisches Zwischenstück 9 als sogenannte "Mastspitze" angeordnet. Das Zwischenstück 9 ist mittels der Verbindungen V₂ und V₃ befestigt. Dieses elastische Zwischenstück 9 erfüllt eine passive Funktion gegenüber der Platte 1. Je nach Grad der Elastizität des Zwischenstücks 9 kann Einfluss auf das Biegeverhalten der Platte 1 genommen werden. Beispielsweise bei einer biegeweichen Platte 1 können durch Einstecken des Zwischenstückes 9 zeiteffektiv und kostengünstig die biegeweichen Eigenschaften der Platte verändert werden, d. h. die Platte kann in ihrem Verhalten biegesteifer gemacht werden. Somit ist mittels Zwischenstück 9 die Steifigkeit der Platte 1 sehr schnell veränderbar, d. h. die Flugeigenschaften sind ohne großem Aufwand veränderbar.

Nach Fig. 6a wird eine Elastizität des Zwischenstückes 9 vorzugsweise durch dessen radial unterschiedliche Durchmesser erreicht. Nach Fig. 6b wird ein Zwischenstück 9 aus Kreuzwicklungen in Faserverbundwerkstoff-Bauweise gezeigt.

Fig. 7 zeigt eine schematische Seitenansicht eines erfindungsgemäßen lagerlosen Rotors gemäß einer vierten Ausführungsform. Bei dieser Variante ist das Strukturelement 7 mindestens bis zum biegeweichen Bereich in mindestens zwei Armelemente 7.1, 7.2 aufgespaltet. Die Armelemente 7.1, 7.2 sind in Richtung der Rotorachse L "gestaffelt", d.h., die zur Rotorachse L weisenden Enden der Armelemente 7.1, 7.2 sind in Richtung der Rotorachse L und damit in Richtung einer Längsachse des Rotormastes 4 voneinander beabstandet. Die Teilung des Strukturelements 7 kann bei Bedarf auch in radialer Richtung bis in den torsionsweichen Bereich fortgesetzt sein. Das in axialer Richtung dem Rotorkopf 3 zugewandte Armelement 7.2 ist mit dem Rotorkopf 3 verbunden. Das in axialer Richtung dem Rotorkopf 3 abgewandte Armelement 7.1 übernimmt die Funktion eines Blattanschlussarmes und ist mit einer Grundplatte G verbunden, die wie die oben beschriebene Platte 1 ebenfalls freitragend aber beispielsweise ohne zusätzliche Blattanschlussarme ausgebildet ist. Die freitragende Grundplatte G ist mittels einer Verbindung V₃ mit dem Armelement 7.1 verbunden. Die Armelemente der restlichen Rotorblätter 8 sind ebenfalls mit der Grundplatte G verbunden.

### Bezugszeichenliste

Es bezeichnen:
- 1: Platte / Stemplatte
- 1.1: Blattanschlussarm von 1
- 1.2: Blattanschlussarm von 1
- 1.3: Blattanschlussarm von 1
- 1.4: Blattanschlussarm von 1
- 2: Rotorkopfplatte
- 2.1: Blattanschlussarm von 2
- 2.2: Blattanschlussarm von 2
- 2.3: Blattanschlussarm von 2
- 2.4: Blattanschlussarm von 2
- 3: Rotorkopf
- 4: Rotormast
- 5: Strukturgrundelement
- 6: Auftrieberzeugendes Blatt
- 7: Strukturelement
- 7.1: Armelement von 7
- 7.2: Armelement von 7
- 8: Rotorblätter
- 9: Elastisches Zwischenstück / Mastspitze

- α: Winkel
- β₀: Neigungswinkel
- G: Grundplatte
- h: Horizontale / horizontale Ebene
- L: Längsachse von 4 / Rotorachse
- S: Fiktives Schlaggelenk
- V₁: Verbindung
- V₁₀: Bolzenverbindung
- V₁₂: Bolzenverbindung
- V₂: Verbindung
- V₃: Verbindung

## Patentansprüche

1. Lagerloser Hubschrauber-Rotor, umfassend einen Rotorkopf (3), einen Rotormast (4) sowie mindestens ein Rotorblatt (8) mit einem auftrieberzeugenden Blatt (6) und mindestens einem zum Rotorkopf (3) und in Rotorblattlängsrichtung angeordneten Strukturelement (7), wobei am Strukturelement (7) ein schlag-, schwenk- und torsionsweicher Bereich ausgebildet ist und das Strukturelement (7) einen Blattanschluss ausgebildet hat, der mit dem Rotorkopf (3) verbunden ist,
**dadurch gekennzeichnet, dass**
das Rotorblatt (8) im Bereich des Strukturelements (7) mit einer Platte (1) verbunden ist, die in Richtung der Rotorachse (L) des Rotors freitragend oberhalb des Rotorkopfes (3) koaxial positioniert ist.

2. Lagerloser Rotor nach Anspruch 1,
**dadurch gekennzeichnet, dass**
das Rotorblatt (8) im schlagweichen Bereich des Strukturelements (7) mit der freitragenden Platte (1) verbunden ist.

3. Lagerloser Rotor nach Anspruch 1,
**dadurch gekennzeichnet, dass**
das Rotorblatt (8) im torsionsweichen Bereich des Strukturelements (7) mit der freitragenden Platte (1) verbunden ist.

4. Lagerloser Rotor nach einem der vorhergehenden Ansprüche,
**dadurch gekennzeichnet, dass**
die freitragende Platte (1) einen sich radial nach außen in Richtung zum Strukturelement (7) erstreckenden Blattanschlussarm (1.1, 1.2, 1.3, 1.4) ausgebildet hat, der eine Verbindung (V₁) mit dem Strukturelement (7) bildet.

5. Lagerloser Rotor nach einem der vorhergehenden Ansprüche,
**dadurch gekennzeichnet, dass**
der Rotorkopf (3) eine Rotorkopfplatte (2) mit einem Blattanschlussarm (2.1, 2.2, 2.3, 2.4) besitzt, der einen Teil des Strukturelementes (7) bildet, und
eine Verbindung (V₁) zwischen der freitragenden Platte (1) und dem Strukturelement (7) den Blattanschlussarm (2.1, 2.2, 2.3, 2.4) bei einem Stillstand des Rotors in einem Neigungswinkel (β₀) gegenüber einer Horizontalen (h) hält

6. Lagerloser Rotor nach Anspruch 1,
**dadurch gekennzeichnet, dass**
die freitragende Platte (1) biegeweich ist.

7. Lagerloser Rotor nach Anspruch 1,
**dadurch gekennzeichnet, dass**
die freitragende Platte (1) in ihrer Biegesteifigkeit variierbar ist.

8. Lagerloser Rotor nach Anspruch 1,
**dadurch gekennzeichnet, dass**
zwischen der freitragenden Platte (1) und der Rotorkopfplatte (2) ein elastisches Zwischenstück (9) angeordnet ist, welches die Biegesteifigkeit der freitragenden Platte (1) beeinflusst.

9. Lagerloser Rotor nach einem der vorhergehenden Ansprüche,
**dadurch gekennzeichnet, dass**
das Strukturelement (7) von dem Rotorkopf (3) zugewandten Ende bis mindestens in den schlagweichen Bereich hinein zumindest zweigeteilt ist und durch die Teilung gebildete Armelemente (7.1, 7.2) besitzt, wobei
die zur Rotorachse (L) weisenden Enden der Armelemente (7.1, 7.2) in Richtung der Rotorachse (L) und damit in Richtung einer Längsachse des Rotormastes (4) voneinander beabstandet sind.

10. Lagerloser Rotor nach Anspruch 9,
**dadurch gekennzeichnet, dass**
das in axialer Richtung (L) dem Rotorkopf (3) zugewandte Armelement (7.2) mit dem Rotorkopf (3) verbunden (V₂) ist.

11. Lagerloser Rotor nach Anspruch 9,
**dadurch gekennzeichnet, dass**
das in axialer Richtung (L) dem Rotorkopf (3) abgewandte Armelement (7.1) mit einer freitragenden Grundplatte (G) verbunden (V₃) ist, welche zusammen mit dem Armelement (7.1) die freitragende Platte (1) bildet.

12. Hubschrauber, umfassen einen lagerlosen Rotor nach einem der Ansprüche 1 bis 11.

## Claims

1. A bearingless helicopter rotor, comprising a rotor head (3), a rotor mast (4) and at least one rotor blade (8) having a lift-generating blade (6) and at least one structural element (7) which is arranged towards the rotor head (3) and in the longitudinal direction of the rotor blade, with a region which is flexible under impact, pivoting and torsion being made on the structural element (7), and the structural element (7) has as part of its structure a blade connection piece which is connected to the rotor head (3),
**characterised in that**
in the region of the structural element (7) the rotor blade (8) is connected to a plate (1) which, as seen in the direction of the rotor axis (L) of the rotor, is positioned coaxially unsupported above the rotor head (3).

2. A bearingless rotor according to Claim 1,
**characterised in that**
the rotor blade (8) is connected to the unsupported plate (1) in the region of the structural element (7) which is flexible under impact.

3. A bearingless rotor according to Claim 1,
**characterised in that**
the rotor blade (8) is connected to the unsupported plate (1) in the region of the structural element (7) which is flexible under torsion.

4. A bearingless rotor according to one of the preceding claims,
**characterised in that**
the unsupported plate (1) has as part of its structure a blade connection arm (1.1, 1.2, 1.3, 1.4) which extends radially outwards in the direction of the structural element (7) and forms a connection (V₁) with the structural element (7).

5. A bearingless rotor according to one of the preceding claims,
**characterised in that**
the rotor head (3) has a rotor head plate (2) with a blade connection arm (2.1, 2.2, 2.3, 2.4) which forms part of the structural element (7), and
a connection (V₁) between the unsupported plate (1) and the structural element (7) holds the blade connection arm (2.1, 2.2, 2.3, 2.4) at an angle of inclination (β₀) with respect to the horizontal (h) when the rotor is at a standstill.

6. A bearingless rotor according to Claim 1,
**characterised in that**
the unsupported plate (1) is flexible under bending.

7. A bearingless rotor according to Claim 1,
**characterised in that**
the unsupported plate (1) is variable in its resistance to bending.

8. A bearingless rotor according to Claim 1,
**characterised in that**
a resilient intermediate piece (9) which has an influence on the resistance to bending of the unsupported plate (1) is arranged between the unsupported plate (1) and the rotor head plate (2).

9. A bearingless rotor according to one of the preceding claims,
**characterised in that**
the structural element (7) is divided at least into two from the end facing the rotor head (3) at least to the region which is flexible under impact, and has arm elements (7.1, 7.2) formed by the division,
with the ends of the arm elements (7.1, 7.2) pointing towards the rotor axis (L) being spaced from one another in the direction of the rotor axis (L) and hence in the direction of a longitudinal axis of the rotor mast (4).

10. A bearingless rotor according to Claim 9,
**characterised in that**
the arm element (7.2) facing the rotor head (3) in the axial direction (L) is connected (V₂) to the rotor head (3).

11. A bearingless rotor according to Claim 9,
**characterised in that**
the arm element (7.1) remote from the rotor head (3) in the axial direction (L) is connected (V₃) to an unsupported base plate (G) which together with the arm element (7.1) forms the unsupported plate (1).

12. A helicopter, comprising a bearingless rotor according to one of Claims 1 to 11.

## Revendications

1. Rotor d'hélicoptère sans roulements, comprenant une tête de rotor (3), un mât-rotor (4) ainsi qu'au moins une pale de rotor (8) avec une pale (6) génératrice de portance et au moins un élément structural (7), disposé en direction de la tête de rotor (3) et dans la direction longitudinale des pales de rotor, une zone souple en battement, en pivotement et en torsion étant réalisée sur l'élément structural (7) et l'élément structural (7) ayant réalisé une attache de pale, assemblée avec la tête de rotor (3), **caractérisé en ce que** la pale de rotor (8) est assemblée dans la zone de l'élément structural (7) avec une plaque (1), qui est positionnée coaxialement en porte-à-faux au-dessus de la tête de rotor (3) en direction de l'axe (L) du rotor.

2. Rotor sans roulements suivant la revendication 1, **caractérisé en ce que** la pale de rotor (8) est assemblée avec la plaque (1) en porte-à-faux dans la zone souple en battement de l'élément structural (7).

3. Rotor sans roulements suivant la revendication 1, **caractérisé en ce que** la pale de rotor (8) est assemblée avec la plaque (1) en porte-à-faux dans la zone souple en torsion de l'élément structural (7).

4. Rotor sans roulements suivant l'une des revendications précédentes, **caractérisé en ce que** la plaque (1) en porte-à-faux a réalisé un bras d'attache de pale (1.1, 1.2, 1.3, 1.4) s'étendant radialement vers l'extérieur en direction de l'élément structural (7), lequel bras forme un assemblage (V₁) avec l'élément structural (7).

5. Rotor sans roulements suivant l'une des revendications précédentes, **caractérisé en ce que** la tête de rotor (3) présente un plateau de moyeu de rotor (2) avec un bras d'attache de pale (2.1, 2.2, 2.3, 2.4), qui forme une partie de l'élément structural (7), et un assemblage (V₁) entre la plaque en porte-à-faux (1) et l'élément structural (7) maintient le bras d'attache de pale (2.1, 2.2, 2.3, 2.4), lors d'un arrêt du rotor, sous un angle d'inclinaison (β₀) par rapport à une horizontale (h).

6. Rotor sans roulements suivant la revendication 1, **caractérisé en ce que** la plaque (1) en porte-à-faux est souple en flexion.

7. Rotor sans roulements suivant la revendication 1, **caractérisé en ce que** la plaque (1) en porte-à-faux est modifiable dans sa rigidité flexionnelle.

8. Rotor sans roulements suivant la revendication 1, **caractérisé en ce qu'**une pièce intermédiaire (9) élastique est disposée entre la plaque (1) en porte-à-faux et le plateau de moyeu de rotor (2), laquelle pièce influe sur la rigidité flexionnelle de la plaque (1) en porte-à-faux.

9. Rotor sans roulements suivant l'une des revendications précédentes, **caractérisé en ce que** l'élément structural (7) est au moins partagé en deux de l'extrémité, tournée vers la tête de rotor (3), jusqu'au moins dans la zone souple en battement, et présente des éléments de bras (7.1, 7.2) formés par le partage, les extrémités des éléments de bras (7.1, 7.2), dirigées vers l'axe de rotor (L), étant distantes les unes des autres en direction de l'axe de rotor (L) et ainsi en direction d'un axe longitudinal du mât-rotor (4).

10. Rotor sans roulements suivant la revendication 9, **caractérisé en ce que** l'élément de bras (7.2), tourné dans la direction axiale (L) vers la tête de rotor (3), est assemblé (V₂) avec la tête de rotor (3).

11. Rotor sans roulements suivant la revendication 9, **caractérisé en ce que** l'élément de bras (7.1), opposé à la tête de rotor (3) dans la direction axiale (L), est assemblé (V₃) avec une plaque de base (G) en porte-à-faux, qui forme avec l'élément de bras (7.1) la plaque (1) en porte-à-faux.

12. Hélicoptère, comprenant un rotor sans roulements suivant l'une des revendications 1 à 11.
